**Europäisches Patentamt**

**European Patent Office**

**Office européen des brevets**

(19)

(11) Veröffentlichungsnummer : **0 207 191**
**B1**

(12) EUROPÄISCHE PATENTSCHRIFT

(45) Veröffentlichungstag der Patentschrift :
05.04.89

(51) Int. Cl.⁴ : **F 16 J 15/32**

(21) Anmeldenummer : 85112839.7

(22) Anmeldetag : 10.10.85

(54) **Kassettendichtung.**

(30) Priorität : 04.06.85 DE 3519966

(43) Veröffentlichungstag der Anmeldung :
07.01.87 Patentblatt 87/02

(45) Bekanntmachung des Hinweises auf die Patenterteilung : 05.04.89 Patentblatt 89/14

(84) Benannte Vertragsstaaten :
AT BE DE FR GB IT NL SE

(56) Entgegenhaltungen :
EP--A-- 0 108 186
EP--A-- 0 128 241
EP--A-- 0 131 650

(73) Patentinhaber : **Firma Carl Freudenberg**
**Höhnerweg 4**
**D-6940 Weinheim/Bergstrasse (DE)**

(72) Erfinder : **Hölzer, Helmut**
**Hegelstrasse 15**
**D-6940 Weinheim (DE)**

(74) Vertreter : **Weissenfeld-Richters, Helga, Dr.**
**Höhnerweg 2**
**D-6940 Weinheim/Bergstrasse (DE)**

## Beschreibung

Die Erfindung betrifft eine Kassettendichtung, bestehend aus einem verdrehsicher in der aufnehmenden Bohrung festgelegten Außenring mit einem nach innen weisenden, hohlkegeligen Ringvorsprung sowie einem verdrehsicher auf der Welle oder Achse festgelegten Innenring mit zwei den Ringvorsprung axial umgreifenden Flanschen.

Auf eine Kassettendichtung der vorgenannten Art nimmt die DE-PS 33 25 201 Bezug. Sie zeichnet sich bei sehr geringen Herstellkosten im allgemeinen durch ein Abdichtungsergebnis unter Vermeidung von Justierarbeiten vor ihrer Inbetriebnahme auch dann aus, wenn Radialverlagerungen, Axialverlagerungen und/oder Winkelverlagerungen der abgedichteten Welle zu erwarten sind. Bei einer Verwendung in der Massenproduktion treten jedoch gelegentliche Ausreißer hinsichtlich dieser Eigenschaften auf, was wenig befriedigend ist.

Der Erfindung liegt die Aufgabe zugrunde, eine Kassettendichtung der eingangs genannten Art derart weiter zu entwickeln, daß das Auftreten entsprechender Ausreißer ohne Inkaufnahme anderer funktioneller Nachteile sicher vermieden wird. Die Kassettendichtung soll kostengünstig verfügbar sein.

Diese Aufgabe wird erfindungsgemäß bei einer Kassettendichtung der eingangs genannten Art dadurch gelöst, daß der den Ringvorsprung innenseitig berührende Flansch eine einstückig angeformte, in Richtung der Welle oder Achse vorspringende Manschette aufweist und daß die Manschette unter einer elastischen Vorspannung an der Welle oder Achse anliegt. Auf vorteilhafte Ausgestaltungen nehmen die Unteransprüche Bezug.

Der Innenring der erfindungsgemäß vorgeschlagenen Kassettendichtung wird somit im Gegensatz zu demjenigen der Kassettendichtung gemäß DE-PS 33 25 201 an zwei einem erheblichen axialen Abstand aufweisenden Stellen durch die abgedichtete Welle oder Achse abgestützt. Er erhält hierdurch eine wesentlich verbesserte Führung, was offensichtlich von entscheidender Bedeutung ist im Hinblick auf die angestrebte Gewährleistbarkeit von guten Dichtungseigenschaften bei einer jeden eingebauten Einheit. Nachkontrollen sind entbehrlich.

Hinsichtlich ihrer übrigen konstruktiven Merkmale kann die Kassettendichtung in Anlehnung an diejenige nach DEPS 33 25 201 ausgebildet werden. Der den hohlkegelig ausgebildeten Ringvorsprung des Außenringes innenseitig berührende Flansch ist jedoch stets zu einer Manschette verlängert, die ihrerseits auf der Oberfläche, der abgedichteten Welle oder Achse abgestützt ist.

Im Hinblick auf die Erzielung einer möglichst guten Führung des Innenringes durch die abgedichtete Welle oder Achse hat es sich als vorteilhaft bewährt, wenn der Flansch und die Manschette im Bereich ihres größten Durchmessers verbunden sind. Die Manschette und der Flansch können dabei im wesentlichen dieselbe Wandstärke haben, wodurch sich zwischen den beiden Stellen, an denen die Oberfläche der abgedichteten Welle oder Stange von dem ruhend anliegenden Innenring berührt wird, ein hermetisch geschlossener Hohlraum ergibt. Sein Vorhandensein trägt wesentlich zur Erzielung einer guten statischen Abdichtung in diesem Bereich bei. Abgedichtetes Medium, zumeist handelt es sich um Öl, vermag dadurch die Kassettendichtung auch nicht im Bereich der Oberfläche der abgedichteten Welle oder Achse zu passieren. Die an der Welle oder Achse anliegenden Stellen des Innenringes können in achsialer Richtung sehr kurz bemessen und ohne Beeinträchtigung einer guten Führung des Innenringes gegebenenfalls durch einander durchschneidende Kegelflächen begrenzt werden. Werkstoffmäßig lassen sich hierdurch Einsparungen erzielen, weshalb die erfindungsgemäße Kassettendichtung gegenüber einer solchen nach der DE-PS 33 25 201 eine nennenwerte Verteuerung nicht ohne weiteres aufweist.

Die Manschette kann nach einer vorteilhaften Ausgestaltung auf der von dem Ringvorsprung des Flansches abgewandten Seite an einer nach innen vorspringenden Kreisringfläche des Außenringes anliegen. In diesem Bereich ergibt sich somit eine weitere dynamische Abdichtungszone die die Serie der im übrigen diesbezüglich bereits vorhandenen, dynamischen Abdichtungszonen zusätzlich ergänzt. Das erzielbare Abdichtungsergebnis weist eine dementsprechende Verbesserung auf.

In Anwendungsfällen, in denen mit starken radialen und/oder axialen Verlagerungen der abgedichteten Welle oder Achse zu rechnen ist, hat es sich als vorteilhaft bewährt, wenn die Manschette in dem die Achse oder Welle berührenden Bereich in Richtung des Flanschen eingerollt ist. Die elastische Verformbarkeit des Innenringes erfährt hierdurch eine deutliche Verbesserung, was dazu führt, daß sich die unter Betriebsbedingungen gleitend aneinander anliegende Flächen des Innen- und des Außenringes hinsichtlich ihrer gegenseitigen Zuordnung auch beim Auftreten von Winkelverlagerungen der Abgedichteten Welle oder Achse kaum verändern. Das ist von erheblichem Vorteil hinsichtlich der Erzielung eines guten Abdichtungsergebnisses auch beim Auftreten entsprechender Betriebssituationen.

Der Außenring der erfindungsgemäß vorgeschlagenen Kassettendichtung soll aus einem möglichst festem Werkstoff bestehen, wobei neben metallischen Werkstoffen auch Kunststoffe in die Überlegungen mit einbezogen werden können, insbesondere solche mit günstigen Gleiteigenschaften, wie beispielsweise PTFE. Der Innenring wird durch den Außenring vor mechanischen Beschädigungen geschützt. Diesbezügliche Überlegungen können daher bei der Ausbildung des Innenringes weitgehend außer Acht gelassen werden. Im Mittelpunkt seiner Ausbildung steht neben der Erzielung möglichst geringer Reibungsverluste im Bereich der dynamischen Abdichtungszonen die Gewährleistung der in diesem Bereich erforderlichen Anpressung zwischen den einander gegenüberliegenden Teilen. Die Verwendung gummielastischer Werkstoffe hat sich ausgezeichnet bewährt.

Der den hohlkegeligen Ringvorsprung des Außenringes innenseitig berührender Flansch kann im Bereich seines größten Durchmessers mit gleichmäßig auf dem Umfang verteilten, axial und radial nach außen geöffneten Aussparungen versehen sein. Die dynamische Abdichtwirkung in diesem Bereich wird hierdurch verbessert, insbesondere wenn der Flansch der Seite des abzudichtenden Mediums zugewandt ist.

Hinsichtlich der Erzielung einer guten Führung des Innenringes hat es sich als vorteilhaft bewährt, wenn die Manschette und der Flansch hohlkegelig ausgebildet und eine entgegengesetzte Neigungsrichtung haben. Beide Teile können einander spiegelbildlich zugeordnet werden.

Der Gegenstand der vorliegenden Erfindung wird nachfolgend anhand der in der Anlage beigefügten Zeichnung weiter erläutert. Diese zeigt drei verschiedene Ausführungen von Kassettendichtungen jeweils in halbeschnittener Darstellung. In allen Fällen ist der Außenring mehrteilig ausgebildet, wobei die einzelnen Teile flüssigkeitsdicht aneinander festgelet sind. Eine einteilige Ausführung ist aber selbstverständlich ebenfalls möglich.

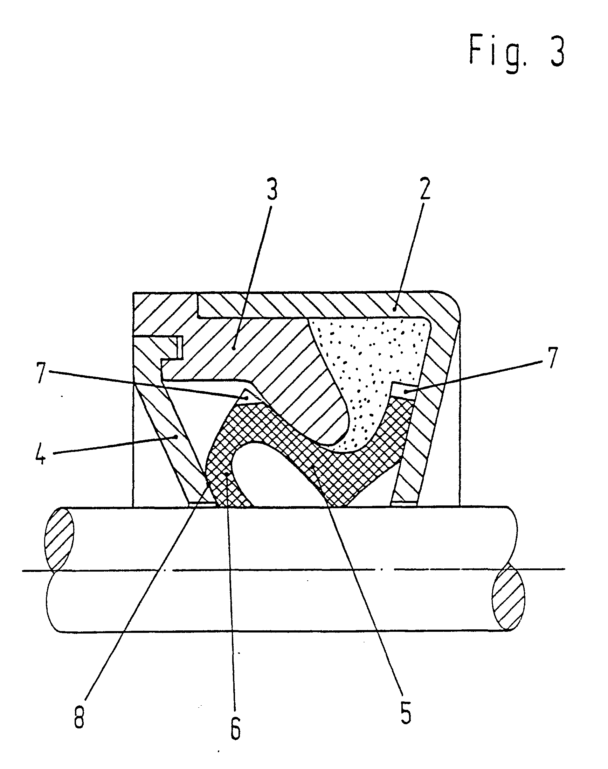

In allen drei Fällen bestehen die äußerlich sichtbaren Teile des Außenringes im wesentlichen aus einer Kappe 2 aus Stahlblech, in welche der den Ringvorsprung 3 tragende Teil axial eingefügt ist. Letzterer besteht aus PTFE oder einen artverwandten Kunststoff. Er weist dadurch besondere günstige Reibungseigenschaften auf, was sich als vorteilhaft bewährt hat im Hinblick auf die Erzielung einer möglichst langen Gebrauchsdauer. Die von dem Ringvorsprung 3 umschlossene Aussparung ist bei der Ausführung nach Figur 3 zusätzlich durch einen Deckel 4 verschlossen. Letzterer besteht ebenfalls aus PTFE oder einem artverwandten Werkstoff und ist flüssigkeitsdicht und verdrehsicher an dem in dem Ringvorsprung 3 tragenden Teil und damit an der Kappe 2 festgelegt.

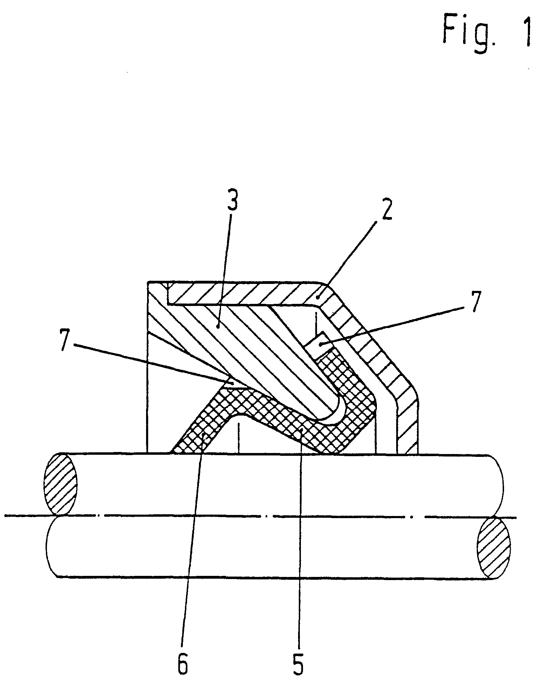

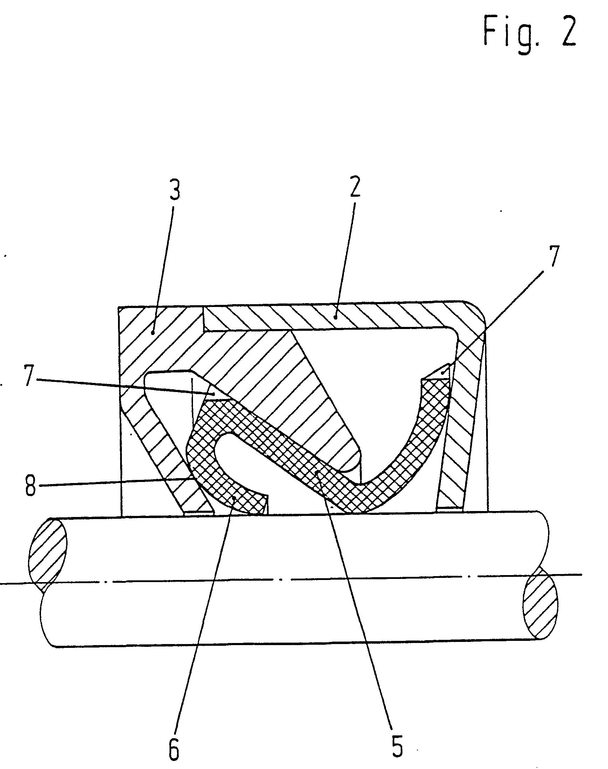

Die zur Anwendung gelangenden Innenringe bestehen aus gummielastischem Werkstoff einer Härte Shore A und 65. Sie liegen mit dem Flansch 5 unter einer elastischen Vorspannung an der Innenseite des Ringvorspungs 3 an, welcher im übrigen unter Bildung einer weiteren, dynamischen Abdichtungszone axial umgriffen wird. Der Flansch 5 geht im Bereich seines größten Außendurchmessers gleichmäßig in die Manschette 6 über, die ihrerseits auf der Oberfläche der abgedichteten Welle oder Achse abgestützt ist. Die Manschette 6 ist bei der Ausführung nach Figur 1 dem Innenring spiegelbildlich zugeordnet, wodurch eine besonders gute Führungswirkung erzielt wird. Bei den Ausführungen nach den Figuren 2 und 3 ist die Manschette in dem die Oberfläche der abgedichteten Welle oder Achse berührenden Bereich in Richtung des Flansches 5 eingerollt, wodurch neben einer guten Führung eine verbesserte Nachgiebigkeit des Innenringes erreicht wird.

Dieser vermag durch gelegentlich auftretende Winkelverlagerungen der abgedichteten Welle oder Achse besser auszugleichen. Zusätzlich ergibt sich eine weitere dynamische Abdichtungszone 8, die dos insgesamt erzielte Abdichtungsergebnis verbessert.

Der Innenring weist im Bereich seiner größten Durchmesser bei allen Ausführungen gleichmäßig auf dem Umfang verteilte, sich in radialer und axialer Richtung erstreckende Vorsprünge 7 auf. Diese üben auf auftreffende Flüssigkeit eine Förderwirkung aus, was das Abdichtungsergebnis begünstigt. Um gleichzeitig gute Notlaufeigenschaften zu gewährleisten, ist der ringförmige Raum zwischen der Kappe 2, dem Ringvorsprung 3 und dem Innenring bei der Ausführung nach Figur 3 mit einem Schmierstoff gefüllt, vorteilhaft mit kolloidalem Graphit.

**Patentansprüche**

1. Kassettendichtung, bestehend aus einem verdrehsicher in der aufnehmenden Bohrung festgelegten Außenring mit einem nach innen weisenden, hohlkegeligen Ringvorsprung (3), sowie einem verdrehsicher auf der Welle oder Achse festgelegten Innenring mit zwei den Ringvorsprung axial umgreifenden Flanschen, dadurch gekennzeichnet, daß der den Ringvorsprung (3) innenseitig berührende Flansch (5) eine einstückig angeformte, in Richtung der Welle oder Achse vorspringende Manschette (6) aufweist und daß die Manschette unter einer elastischen Vorspannung an der Welle oder Achse anliegt.

2. Kassettendichtung nach Anspruch 1, dadurch gekennzeichnet, daß der Flansch (5) und die Manschette (6) im Bereich ihres größten Durchmessers verbunden sind.

3. Kassettendichtung nach Anspruch 1 bis 2, dadurch gekennzeichnet, daß die Manschette (6) und der Flansch (5) im wesentlichen die selbe Wandstärke haben.

4. Kassettendichtung nach Anspruch 1 bis 3, dadurch gekennzeichnet, daß die Manschette (6) und der Flansch (5) hohlkegelig ausgebildet sind und eine entgegengesetzte Neigungsrichtung haben.

5. Kassettendichtung nach Anspruch 1 bis 4, dadurch gekennzeichnet, daß die Manschette (6) auf der von dem Ringvorsprung (3) des Flansches (5) abgewandten Seite an einer nach innen vorspringenden Kreisfläche (8) des Außenringes dichtend anliegt.

6. Kassettendichtung nach Anspruch 5, dadurch gekennzeichnet, daß die Manschette (6) in dem die Achse oder Welle berührenden Bereich in Richtung des Flansches (5) eingerollt ist.

7. Kassettendichtung nach Anspruch 1 bis 6, dadurch gekennzeichnet, daß der Flansch (5) im Bereich seines größten Durchmessers mit gleichmäßig auf dem Umfang verteilten axial und radial nach außen geöffneten Aussparungen versehen ist.

## Claims

1. A cassette seal, composed of an outer ring, which is fixed securely against twisting in the receiving bore and has an inwardly pointing, hollow-conical annular projection (3), and of an inner ring, which is fixed securely against twisting on the shaft or spindle and having two flanges gripping axially around the annular projection, characterized in that the flange (5) contacting the annular projection (3) on the inside has an integrally attached sleeve (6), projecting in the direction of the shaft or spindle, and in that the sleeve bears under flexible pretension against the shaft or spindle.

2. A cassette seal according to claim 1, characterized in that the flange (5) and the sleeve (6) are connected in the region of their greatest diameter.

3. A cassette seal according to either of claims 1 or 2, characterized in that the sleeve (6) and the flange (5) have essentially the same wall thickness.

4. A cassette seal according to any of claims 1 to 3, characterized in that the sleeve (6) and the flange (5) are of hollow-conical design and have an opposite direction of inclination.

5. A cassette seal according to any of claims 1 to 4, characterized in that the sleeve (6) bears in a sealing manner against an inwardly projecting circular surface (8) of the outer ring on the side of the flange (5) facing away from the annular projection (3).

6. A cassette seal according to claim 5, characterized in that the sleeve (6) is rolled-in in the direction of the flange (5) in the region contacting the spindle or shaft.

7. A cassette seal according to any of claims 1 to 6, characterized in that the flange (5) is provided in the region of its greatest diameter with recesses opened axially and radially outwards and distributed evenly around the circumference.

## Revendications

1. Bague d'étancheité à boîtier constituée d'une bague extérieure fixée, sans possibilité de rotation, dans l'alésage qui la reçoit, avec une saillie annulaire (3) en forme de cône creux tournée vers l'intérieur ainsi qu'une bague intérieure fixée, sans possibilité de rotation, sur l'arbre ou l'axe, avec deux brides entourant axialement la saillie annulaire, caractérisée en ce que la bride (5) en contact intérieurement avec la saillie annulaire (3) présente une manchette (6) réalisée d'une pièce et faisant saillie en direction de l'arbre ou de l'axe et en ce que la manchette prend appui sur l'arbre ou sur l'axe avec précontrainte élastique.

2. Bague d'étanchéité à boîtier selon la revendication 1, caractérisée en ce que la bride (5) et la manchette (6) sont assemblées dans la zone de leur plus grand diamètre.

3. Bague d'étanchéité à boîtier selon les revendications 1 et 2, caractérisée en ce que la manchette (6) et la bride (5) présentent essentiellement les mêmes épaisseurs de parois.

4. Bague d'étanchéité à boîtier selon les revendications 1 à 3, caractérisée en ce que la manchette (6) et la bride (5) ont une forme en cône creux et présentent des directions d'inclinaison opposées.

5. Bague d'étanchéité à boîtier selon les revendications 1 à 4, caractérisée en ce que la manchette (6) prend appui sur le côté opposé à la saillie annulaire (3) de la bride (5) sur une surface circulaire (8) en saillie vers l'intérieur de la bague extérieure, et cela de manière étanche.

6. Bague d'étanchéité à boîtier selon la revendication 5, caractérisée en ce que la manchette (6) est enroulée dans la zone au contact de l'axe ou de l'arbre, en direction de la bride (5).

7. Bague d'étanchéité à boîtier selon les revendications 1 à 6, caractérisée en ce que la bride (5) est pourvue, dans la zone de son plus grand diamètre, de cavités ouvertes axialement et radialement vers l'extérieur et réparties uniformément sur la périphérie.

Fig. 1

Fig. 2

Fig. 3